# EUROPÄISCHE PATENTSCHRIFT

(11) **EP 0 352 443 B1**
(45) Veröffentlichungstag und Bekanntmachung des Hinweises auf die Patenterteilung: **01.09.1993**
(21) Anmeldenummer: 89110005.9
(22) Anmeldetag: 02.06.1989
(51) Int. Cl.: B60J 7/05

(54) **Schiebehebedach für ein Fahrzeug**
Sliding roof for a vehicle
Toit ouvrant pour véhicule automobile

(30) Priorität: 25.07.1988 DE 3825191
(43) Veröffentlichungstag der Anmeldung: 31.01.1990
(73) Patentinhaber: Bayerische Motoren Werke Aktiengesellschaft, 80788 München (DE)
(72) Erfinder: Clausen-Schaumann, Andreas, D-8139 Bernried (DE)

(56) Entgegenhaltungen:
- EP-A- 0 106 611
- EP-A- 0 214 344

## Beschreibung

Die Erfindung betrifft ein Schiebehebedach für ein Fahrzeug, mit den im Oberbegriff des Patentanspruchs 1 angegebenen Merkmalen.

Ein derartiges Schiebehebedach ist bereits durch die DE-A-19 33 991 bekannt, die einen Deckel mit Langlöchern an den hinteren Seitenbereichen aufweist, in die jeweils ein von einem Ausstellhebel seitlich abstehender Bolzen längsverschiebbar eingreift. Von dem zweiten Hebelarm des schwenkbar an einem längsverstellbaren Antriebsschlitten befestigten zweiarmigen Ausstellhebels steht seitlich ein weiterer Bolzen ab, der zur Steuerung der Schwenkbewegung des Ausstellhebels mit einer Führungsrolle in eine dachfeste Führung eingreift. Besonders nachteilig ist, daß der Deckel in seiner Schließstellung und in einem Anfangsbereich beim Ausstellen des Deckels aus der Schließstellung nicht ausreichend festgehalten ist. In Schließstellung des Deckels befindet sich der von dem Ausstellhebel abstehende Bolzen etwa im mittleren Bereich des zugeordneten Langloches am Deckel, so daß der Deckel Längsbewegungen ausführen kann, wenn dies nicht auf andere Weise, beispielsweise von einer zusätzlichen Arretierungseinrichtung verhindert ist. Der in Schließstellung vermutlich an einem vorderen Anschlag anliegende Deckel schwenkt beim Ausstellen mit seiner Hinterkante derart nach oben, daß der am vorderen Ende der Führungsbahn anliegende Bolzen des Ausstellhebels eine kreisbogenförmige Bewegung ausführt, mit in Schließstellung etwa vertikaler Anfangsbewegung. Aufgrund dieser etwa vertikalen Anfangsbewegung des Bolzens beim Ausstellen des Deckels führt auch das mit der Führungsrolle in die dachfeste Führung eingreifende andere Ende des Ausstellhebels eine etwa vertikale Bewegung aus. Dieser Bewegung entsprechend verläuft der zugeordnete Bereich der Führung etwa kreisbogenförmig um die Schwenkachse des Ausstellhebels, wenn die Schwenkachse von dem Antriebsschlitten aus der Schließstellung so weit nach vorne verlagert ist, daß der Bolzen des Ausstellhebels am vorderen Endbereich der Führung am Deckel anliegt. Der zugeordnete Bereich der Führung liegt somit bei einer Anfangsausstellbewegung des Deckels in Bewegungsrichtung der Führungsrolle des Ausstellhebels, so daß bei dieser Ausstellbewegung die Führungsrolle nicht mit den Seitenwänden der Führung zusammenwirken kann. Der Deckel ist somit bei einer Anfangsausstellbewegung von dem Ausstellhebel nicht bzw. nicht ausreichend festgehalten. Aufgrund der Zapfen-Langloch-Verbindung des Ausstellhebels mit dem Deckel kann dieser beim Ausstellen nicht von dem Ausstellhebel zurückverlagert werden, so daß eine im vorderen Bereich zwischen dem Deckel und dem Rand der Dachöffnung angeordnete Dichtung oder ein Windabweiser eingeklemmt und eventuell beschädigt wird.

Die EP-A-214 344 weist eine Führung auf, mit der die Höhenbewegung des vorderen Deckelendes gesteuert wird. Hierzu ist ein aufwendiges Stützteil erforderlich, das an einem nach hinten gerichteten Arm einen in die Führung eingreifenden Zapfen aufweist. Zur Höhen- und Längsverstellung des Zapfens ist eine weitere Führung vorgesehen, die nur im Zusammenwirken mit der erstgenannten Führung eine Verlagerung des Zapfens bewirken kann.

Der Erfindung liegt die Aufgabe zugrunde, ein Schiebehebedach für ein Fahrzeug mit den Merkmalen im Oberbegriff des Patentanspruches 1 anzugeben, das in Schließstellung und in jeder Lage bei ausgestelltem Deckel größere, insbesondere vertikale Belastungen des Deckels aufnehmen kann. Darüber hinaus soll das Schiebehebedach einen einfachen Verstellmechanismus und eine geringe Bauhöhe aufweisen.

Diese Aufgabe ist durch die im Kennzeichen des Patentanspruches 1 angegebenen Merkmale gelöst. Bei den beiden alternativen Ausführungen bewirkt eine Belastung des Deckels ein Biegemoment an dem Ausstellhebel, das bei geschlossenem Deckel und in jeder Lage des ausgestellten Deckels über den senkrecht zu den Seitenwänden der dachfesten Führung belasteten Zapfen am Ausstellhebel zuverlässig abgestützt ist. Der Deckel ist ständig mit dem Ausstellhebel und dem Antriebsschlitten gekoppelt. Die Bewegung des Deckels wird durch Längsverlagerung des Antriebschlittens und den mit der Fuhrung zusammenwirkenden Zapfen gesteuert. Bei dieser Abstutzung ist der Deckel auch bei höheren Belastungen zuverlässig festgehalten. Die Lage des Deckels ist durch die Position des Antriebschlittens festgelegt. Eine zusätzliche Arretierungseinrichtung zum Festhalten des Deckels beim Ausstellen und Einschwenken bzw. in Schließstellung ist deshalb nicht erforderlich. Die Führung kann so ausgebildet sein, daß der Deckel beim Ausstellen über die Ausstellhebel etwas zurückverlagert wird, damit ein zwischen dem Deckel und dem vorderen Rand der Dachöffnung angeordnetes Teil, beispielsweise ein Windabweiser oder ein Dichtungselement nicht eingeklemmt oder beschädigt wird. Aufgrund der hohen Hebelübersetzung beim Ausstellen des Deckels ist dieser auch bei einer geringen Bauhöhe der Führung über einen größeren Höhenverstellbereich ausstellbar. Der Ausstellhebel kann eine gestreckte Form aufweisen. In Schließstellung und bei abgesenkt zurückverlagertem Deckel ist der Ausstellhebel etwa horizontal angeordnet, so daß das Schiebehebedach mit einer geringen Bauhöhe zu fertigen ist.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Fig. 1: einen Längsschnitt durch das in einem ersten Ausführungsbeispiel dargestellte Schiebehebedach bei ausgestelltem Deckel,
- Fig. 2: eine Fig. 1 entsprechende Ansicht bei geschlossenem Deckel,
- Fig. 3: eine Fig. 1 entsprechende Ansicht bei abgesenktem und etwas zurückverlagertem Deckel,
- Fig. 4: die zur Steuerung der Schwenkbewegung des Deckels vorgesehene Führung in Seitenansicht,
- Fig. 5: eine Fig. 1 entsprechende Ansicht eines zweiten Ausführungsbeispiels,
- Fig. 6: eine Fig. 2 entsprechende Ansicht des Ausführungsbeispiels gemäß Fig. 5 und
- Fig. 7: eine Fig. 3 entsprechende Ansicht des Ausführungsbeispiels gemäß Fig. 5.

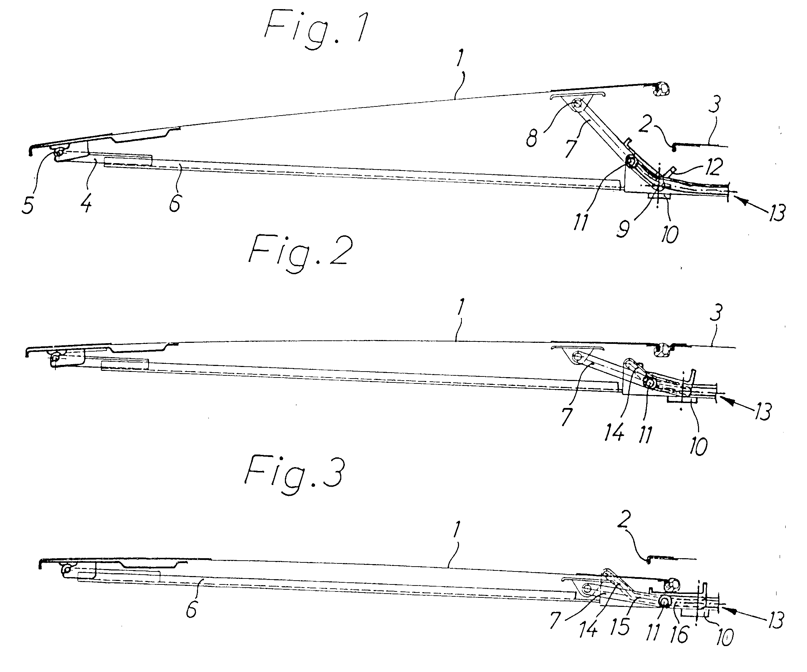

Das in Fig. 1 in einem ersten Ausführungsbeispiel dargestellte Schiebehebedach eines Kraftfahrzeugs weist einen Deckel 1 auf, der in seiner Schließstellung eine Dachöffnung 2 verschließt. Der Deckel 1 kann aus seiner Schließstellung mit seiner Hinterkante über die Kontur des Fahrzeugdaches 3 hinaus nach oben ausgestellt werden. Nach dem Absenken aus der Schließstellung kann der Deckel 1 in ein hinteres, nicht dargestelltes Dachaufnahmefach eingebracht werden. An seinen vorderen Seitenbereichen ist der Deckel 1 an zwei seitlich gegenüberliegenden Gleitsteinen 4 um eine quer verlaufende Schwenkachse 5 schwenkbar befestigt, die in Dachlängsführungen 6 frei verschiebbar sind. An den beiden hinteren Seitenbereichen des Deckels 1 ist jeweils das nach vorne oben gerichtete Ende eines Ausstellhebels 7 um eine Anlenkquerachse 8 schwenkbar befestigt. Das Schiebehebedach ist zur vertikalen Fahrzeuglängsmittelebene symmetrisch ausgebildet. Auf die zu seitlich angeordneten Teilen gegenüberliegenden Bauteile wird deshalb nicht ausdrücklich hingewiesen. Das hintere Ende des Ausstellhebels 7 ist um eine Querachse 9 schwenkbar an einem dachseitig längsverstellbaren Antriebsschlitten 10 befestigt, der im Ausführungsbeispiel mit einem nicht dargestellten angetriebenen Seil verbunden ist. Zwischen der Anlenkquerachse 8 am Deckel 1 und der Querachse 9 am Antriebsschlitten 10 ist an dem Ausstellhebel 7 ein Zapfen 11 befestigt. Bei dem Ausführungsbeispiel ist der Zapfen 11 nicht direkt an dem Ausstellhebel 7, sondern seitlich nach außen abstehend an einer Seitenwand einer quer verlaufenden Wasserrinne 12 befestigt, die das bei ausgestelltem Deckel 1 im hinteren Bereich der Dachöffnung 2 eindringende Wasser sammelt und ableitet und die beiden seitlich gegenüberliegenden Ausstellhebel 7 in Querrichtung verbindet. Zur Steuerung der Schwenkbewegung des Deckels 1 greift der Zapfen 11 in eine dachfeste Führung 13 ein. Die Führung 13 oder der Zapfen 11 könnte zur Justierung in Dachlängsrichtung einstellbar sein. Wie man aus der Figur erkennt, befindet sich der Zapfen 11 bei ausgestelltem Deckel 1 in dem vorderen, nach vorne oben gerichteten Endabschnitt der Führung 13. Der vordere Endabschnitt der Führung 13 verläuft schräg nach vorne oben, so daß der hintere Bereich des Deckels 1 von dem durch das Antriebsseil ortsfest gehaltenen Antriebsschlitten 10 und dem mit der Führung 13 zusammenwirkenden Zapfen 11 in Fahrzeuglängsrichtung festgehalten ist. Da die frei längsverstellbaren Gleitsteine 4 eine Schwenkbewegung des Deckels 1 um die hintere Anlenkquerachse 8 verhindern, ist der Deckel 1 bei feststehendem Antriebsschlitten 10 lagegenau festgehalten.

Beim Einschwenken des Deckels 1 in die in Fig. 2 dargestellte, mit dem Fahrzeugdach 3 bündige Schließstellung wird der Antriebsschlitten 10 zurückverlagert. Die Einschwenkbewegung des Deckels 1 wird über einen vorderen, nach vorne oben gerichteten Endabschnitt 14 der Führung 13 gesteuert, der mit dem Zapfen 11 an dem Ausstellhebel 7 zusammenwirkt.

In Fig. 3 ist der Deckel 1 aus seiner die Dachöffnung 2 bündig verschließenden Schließstellung abgesenkt und ein wenig zurückverlagert dargestellt. Der Zapfen 11 hat sich dabei aus dem vorderen Endabschnitt 14 und einem dahinter angrenzenden, zum vorderen Endabschnitt 14 flacheren Führungsbereich 15 in einen hinteren Endabschnitt 16 der Führung 13 verlagert. Der hintere Endabschnitt 16 verläuft etwa horizontal nach hinten in das zur Aufnahme des abgesenkt zurückverlagerten Deckels 1 vorgesehene, nicht dargestellte Aufnahmefach. Wie aus der Figur ersichtlich ist, befindet sich der Ausstellhebel 7 in der dargestellten Stellung des Deckels 1 in einer etwa horizontalen Lage. Wird der Deckel 1 aus seiner abgesenkten und zurückverlagerten Stellung nach vorne bewegt, so wird der hintere Bereich des Deckels 1 nach oben in seine Schließstellung verlagert, wenn der Zapfen 11 in den hinteren Abschnitt des Führungsbereiches 15 eingreift. Der vordere Bereich des Deckels 1 wird dabei in an sich bekannter Weise durch einen schräg nach vorne oben gerichteten Abschnitt der Dachlängsführung 6 nach oben in die Dachöffnung 2 verlagert. In der nicht dargestellten Schließstellung des Deckels 1 befindet sich der Zapfen 11 im hinteren unteren Bereich des vorderen, im Ausführungsbeispiel etwa geraden Endabschnittes 14 der Führung 13. Bei einer weiteren Bewegung des Antriebsschlittens 10 nach vorne wird der Deckel 1 über den mit dem vorderen Endabschnitt 14 zusammenwirkenden Zapfen 11 in die in Fig. 1 dargestellte Lage ausgestellt. Die Schwenkbewegung des Deckels 1 beim Ausstellen oder Absenken kann durch einen entsprechenden Verlauf des vorderen Endabschnittes 14 und des Führungsbereiches 15 gesteuert werden. Bei dem Ausführungsbeispiel ist der vordere Endabschnitt 14 so ausgebildet, daß der Deckel 1 beim Ausstellen so in Fahrzeuglängsrichtung zurückverlagert wird, daß der zwischen dem Deckel 1 und dem vorderen Rand der Dachöffnung 2 angeordnete, nicht dargestellte Windabweiser nicht eingeklemmt oder beschädigt wird.

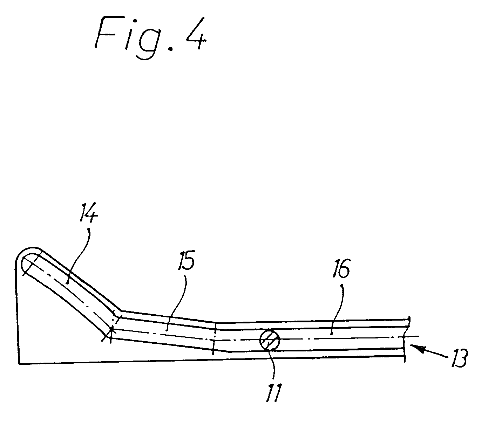

Der Verlauf der dachfesten Führung 13 ist in Fig. 4 in Seitenansicht vergrößert dargestellt. Wie zu erkennen ist, weist der vordere Endabschnitt 14, der dahinter angrenzende Führungsbereich 15 und der hintere Endabschnitt 16 jeweils einen im Ausführungsbeispiel geraden Verlauf auf, wobei der Führungsbereich 15 etwas flacher als der vordere Endabschnitt 14 verläuft. Ebenso könnte der vordere Endabschnitt 14 oder der Führungsbereich 15 einen anderen, beispielsweise gekrümmten Verlauf aufweisen. Zur Steuerung der Schwenkbewegung des Deckels wirkt der von dem Ausstellhebel abstehende und in die Führung 13 eingreifende Zapfen 11 mit dem vorderen Endabschnitt 14, dem Führungsbereich 15 und dem hinteren Endabschnitt 16 zusammen.

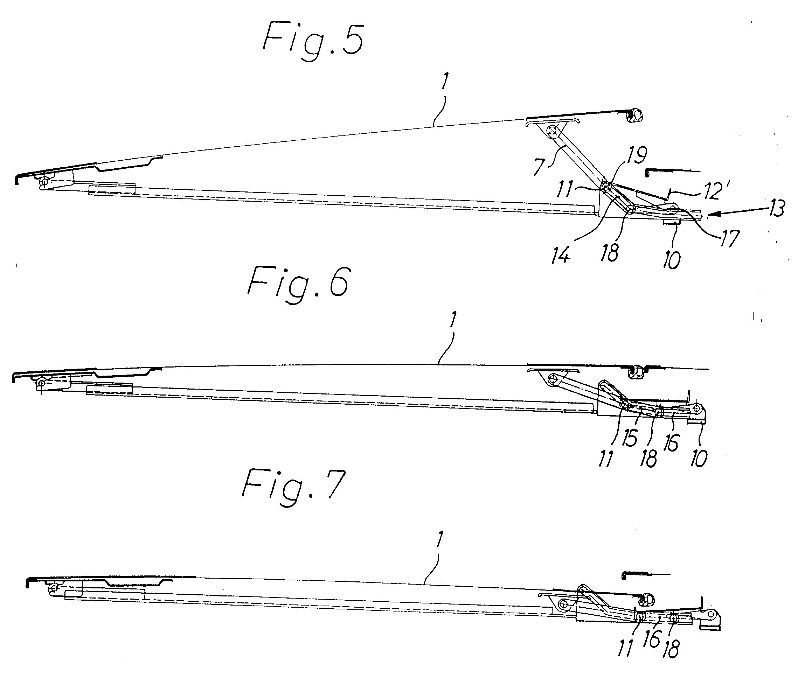

Ein zweites, in Fig. 5 dargestelltes Ausführungsbeispiel weist mit Ausnahme der nachfolgend beschriebenen Abweichungen denselben Aufbau auf wie das in den Fig. 1 bis 4 beschriebene Ausführungsbeispiel. Bei diesem Ausführungsbeispiel ist die Wasserrinne 12′ an ihren beiden vorderen Seitenbereichen um eine Querachse schwenkbar mit den seitlich gegenüberliegenden Ausstellhebeln 7 verbunden, die im Ausführungsbeispiel durch die Achse 19 der von den Ausstellhebeln 7 seitlich koaxial abstehenden Zapfen 11 gebildet ist. An ihrem hinteren Ende ist die nach oben offene, im Querschnitt U-förmige Wasserrinne 12′ um eine Schlittenquerachse 17 schwenkbar an dem Antriebsschlitten 10 befestigt. Hinter dem Zapfen 11 steht von dem Ausstellhebel 7 ein ebenfalls in die Führung 13 eingreifender Bolzen 18 seitlich ab, der parallel zum Zapfen 11 verläuft. Der Zapfen 11 und der Bolzen 18 weisen einen im Vergleich zur Länge des vorderen Endabschnittes 14 der Führung 13 etwas geringeren Abstand voneinander auf, so daß sich bei vollständig ausgestelltem Deckel 1 der Zapfen 11 und der Bolzen 18 in dem vorderen Endabschnitt 14 der Führung 13 befinden.

Beim Einschwenken des ausgestellten Deckels 1 in die in Fig. 6 dargestellte Schließstellung wird der Antriebsschlitten 10 zurückverlagert. In dieser Stellung befindet sich der Zapfen 11 am vorderen Ende der mittleren Führungsbereiches 15. Der Bolzen 18 kann sich in der dargestellten Schließstellung des Deckels 1 sowohl im hinteren Bereich des mittleren Führungsbereiches 15 als auch im vorderen Bereich des Endabschnittes 16 befinden.

In der Darstellung gemäß Fig. 7 ist der Deckel 1 aus seiner Schließstellung abgesenkt und etwas zurückverlagert dargestellt. Der Zapfen 11 und der Bolzen 18 befinden sich in dem hinteren Endabschnitt 16 der Führung, der bei dem Ausführungsbeispiel bis in ein hinteres, nicht dargestelltes Aufnahmefach für den Deckel 1 verläuft.

Bei den beiden Ausführungsbeispielen wird der Deckel (1) über den Ausstellhebel (7) aus einer abgesenkten Stellung in die Schließstellung angehoben, nach oben ausgestellt und beim Ausstellen etwas zurückverlagert. Ebenso kann ein Ausstellen des Deckels (1) über eine andere, beispielsweise bekannte Deckelausstelleinrichtung erfolgen. In diesem Fall bildet der Antriebsschlitten (10) und der mit der Führung (13) zusammenwirkende Ausstellhebel (7) einen Deckelverstellmechanismus, der das Anheben des abgesenkten Deckels (1) in die Schließstellung unterstützt und/oder beim Ausstellen eine Rückverlagerung des Deckels (1) derart bewirkt, daß der Deckel (1) die zwischen dem vorderen Rand der Dachöffnung (2) und dem Deckel (1) angeordneten Bauteile nicht einklemmt. Der Antriebsschlitten (10) kann dabei ein in Dachlängsführungen verschiebbarer Schlitten des Deckelverstellmechanismuses sein, der über den Ausstellhebel (7) ein Anheben des abgesenkten Deckels (1) in die Schließstellung und eine Rückverlagerung des ausgestellten Deckels (1) bewirkt.

## Patentansprüche

1. Schiebehebedach für ein Fahrzeug, mit einem aus einer Dachöffnung (2) abgesenkt zurückverlagerbaren und in Schließstellung ausstellbaren Deckel (1), der vorne an seitlichen, in Dachlängsführungen (6) verschiebbaren Gleitsteinen (4) um eine quer verlaufende Schwenkachse (5) schwenkbar befestigt und hinten über je einen seitlichen Ausstellhebel (7) höhenverstellbar ist, der um eine Querachse (9, Achse 19) schwenkbar mit einem dachseitigen längsverstellbaren Antriebsschlitten (10) verbunden ist und mit seinem in Schließstellung nach vorne oben gerichteten Ende mit dem Deckel (1) schwenkbar in Verbindung steht, wobei ein von dem Ausstellhebel (7) seitlich abstehender Zapfen (11, Bolzen 18) in einer die Schwenkbewegung des Deckels (1) steuernden dachfesten Führung (13) geführt ist, die einen vorderen Endabschnitt (14) aufweist, der beim Ausstellen des Deckels (1) mit dem Zapfen (11, Bolzen 18) Zusammenwirkt, dadurch gekennzeichnet, daß der Ausstellhebel (7) um eine Anlenkquerachse (8) am Deckel (1) schwenkbar an diesem befestigt ist, der vordere Endabschnitt (14) der Führung (13) schräg nach vorne oben verläuft und entweder der Zapfen (11) zwischen der Anlenkquerachse (8) am Deckel (1) und einer den Ausstellhebel (7) lagernden Querachse (9) am Antriebsschlitten (10) an dem Ausstellhebel (7) befestigt ist oder von dem Ausstellhebel (7) hinter dem Zapfen (11) ein die Führung (13) eingreifender Bolzen (18) seitlich absteht, der parallel zum Zapfen (11) verläuft, wobei der Ausstellhebel (7) über ein Koppelelement (Wasserrinne 12') mit dem Antriebsschlitten (10) verbunden ist, das an seinem vorderen Bereich um eine quer verlaufende Achse (19) schwenkbar mit dem Ausstellhebel (7) und an seinem hinteren Bereich um eine Schlittenquerachse (17) schwenkbar mit dem Antriebschlitten (10) verbunden ist.

2. Schiebehebedach nach Anspruch 1, dadurch gekennzeichnet, daß die beiden seitlich gegenüberliegenden Ausstellhebel (7) über eine quer verlaufende Wasserrinne (12) verbunden sind und der Zapfen (11) von einem seitlichen Wandabschnitt der Wasserrinne (12) seitlich nach außen absteht.

3. Schiebehebedach nach einem der Ansprüche 1 oder 2, dadurch gekennzeichnet, daß sich der Zapfen (11) bei ausgestelltem Deckel (1) in dem vorderen, nach vorne oben gerichteten Endabschnitt (14) der Führung (13) und bei geschlossenem Deckel (1) im hinteren Bereich des vorderen Endabschnittes (14) befindet.

4. Schiebehebedach nach Anspruch 3, dadurch gekennzeichnet, daß sich hinter dem vorderen Endabschnitt (14) der Führung (13) ein zum Absenken des Deckels (1) aus der Schließstellung vorgesehener Führungsbereich (15) anschließt, der gegenüber dem vorderen Endabschnitt (14) flacher verläuft.

5. Schiebehebedach nach Anspruch 4, dadurch gekennzeichnet, daß die Führung (13) in einem hinteren, an den Führungsbereich (15) angrenzenden Endabschnitt (16) bis in ein hinteres, zur Aufnahme des Deckels (1) vorgesehenes Aufnahmefach etwa horizontal verläuft.

6. Schiebehebedach nach einem der Ansprüche 1 bis 5, dadurch gekennzeichnet, daß die Führung (13) oder der Zapfen (11) zur Justierung in Dachlängsrichtung einstellbar ist.

7. Schiebehebedach nach Anspruch 1, dadurch gekennzeichnet, daß die beiden seitlich gegenüberliegenden Koppelelemente durch Stegbereiche einer im Querschnitt U-förmigen, nach oben offenen Wasserrinne (12′) gebildet sind, die bei ausgestelltem Deckel im hinteren Bereich der Dachöffnung (2) quer verläuft und eindringendes Wasser sammelt und ableitet.

8. Schiebehebedach nach einem der Ansprüche 1 bis 7, dadurch gekennzeichnet, daß neben einer das Ausstellen des Deckels (1) bewirkenden Deckelausstelleinrichtung ein Deckelverstellmechanismus vorgesehen ist, der das Anheben des abgesenkten Deckels (1) in die Schließstellung unterstützt und/oder beim Ausstellen eine Rückverlagerung des Deckels (1) derart bewirkt, daß der Deckel (1) die zwischen dem vorderen Rand der Dachöffnung (2) und dem Deckel (1) angeordneten Bauteile nicht einklemmt.

9. Schiebehebedach nach Anspruch 8, dadurch gekennzeichnet, daß der Antriebsschlitten (10) ein in Dachlängsführungen verschiebbarer Schlitten des Deckelverstellmechanismuses ist und der Schlitten (10) ein Anheben und/oder eine Rückverlagerung des Deckels (1) über den Ausstellhebel (7) bewirkt.

## Claims

1. A sliding and lifting roof for a vehicle comprising a cover (1) which when lowered can be moved back from a roof opening (2) and extended in the closed position and is secured at the front to lateral slide rings (4) movable in longitudinal guides (6) in the roof, so as to be pivotable around a transverse axis (5), whereas at the rear it is vertically adjustable via an extension lever (7) on each side, the lever being pivotable around a transverse axis (9, 19) and being connected to a longitudinally-adjustable drive slide (10) on the roof side while the end of the lever which in the closed position extends forwards and upwards is pivotably connected to the cover (1), and a journal (11, pin 18) projecting laterally from the extension lever (7) and being guided in a guide (13) secured to the roof and controlling the pivoting motion of the cover (1) and having a front end portion (14) which co-operates with the journal (11, pin 18) when the cover (1) is extended, characterised in that the extension lever (7) is secured to the cover (1) so as to be pivotable around a transverse axis (8), the front end portion (14) of the guide (13) slopes forwards and upwards and either the journal (11) is secured to the lever (7) between the transverse axis (8) on the cover (1) and a transverse axis (9) or shaft bearing the lever (7) on the drive slide (10) or a pin (18) engaging the guide (13) projects laterally from the lever (7) behind the journal (11) and extends parallel thereto, the lever (7) being coupled by an element (gutter 12') to the drive slide (10) the front portion of which is connected to the lever (7) so as to be pivotable around a transverse axis (19) whereas the rear portion is connected to the slide (10) so as to be pivotable around a transverse axis (17) of the slide.

2. A roof according to claim 1, characterised in that the two laterally opposite extension levers (7) are connected by a transverse gutter (12), and the journal (11) projects sideways and outwards from a lateral wall portion of the gutter (12).

3. A roof according to claim 1 or 2, characterised in that, when the cover (1) is extended, the journal (11) is disposed in the front, forwardly rising end portion (14) of the guide (13), whereas when the cover (1) is closed, the journal is in the rear region of the front end portion (14).

4. A roof according to claim 3, characterised in that a guide region (15) for lowering the cover (1) from the closed position is behind and adjacent the front end portion (14) of the guide (13), and is flatter than the portion (14).

5. A roof according to claim 4, characterised in that the guide (13) has a rear end portion (16) adjacent the guide region (15) and extending approximately horizontally to a rear compartment for receiving the cover (1).

6. A roof according to any of claims 1 to 5, characterised in that the guide (13) or journal (11) is adjustable in the longitudinal direction of the roof.

7. A roof according to claim 1, characterised in that the two laterally opposite coupling elements are in the form of web regions of an upwardly open gutter (12') which has a U cross-section and which, when the cover is extended, is transversely disposed in the rear region of the roof opening (2) and collects and drains incoming water.

8. A roof according to any of claims 1 to 7, characterised in that, in addition to the device for extending the cover (1), a cover-adjusting mechanism is provided and assists in raising the lowered cover (1) into the closed position and/or, during the extension process, moves the cover (1) backwards so that the cover (1) does not clamp any components disposed between the cover (1) and the front edge of the roof opening (2).

9. A roof according to claim 8, characterised in that the drive slide (10) is a slide in the cover-adjusting mechanism movable in longitudinal guides in the roof, and the slide (10) raises the cover (1) and/or moves it back via the extension lever (7).

## Revendications

1. Toit ouvrant pour véhicule automobile, avec un couvercle (1) pouvant être ramené en arrière abaissé à partir d'une ouverture de toit (2) et pouvant être mis en position de fermeture, couvercle qui est fixé de façon à pouvoir pivoter en avant sur des blocs de glissement (4) susceptibles de coulisser dans des guidages de toit dans le sens longitudinal (6) autour d'un axe de pivotement (5) s'étendant transversalement et qui peut être déplacé en hauteur en arrière au moyen d'un levier latéral de soulèvement (7), qui est relié de façon à pouvoir pivoter autour d'un axe transversal (9, axe 19) à une glissière d'entraînement (10) située du côté du toit pouvant se déplacer dans le sens longitudinal et est en liaison de façon à pouvoir pivoter par son extrémité dirigée dans la position de fermeture vers l'avant et vers le haut, avec le couvercle (1), tandis qu'un tenon (11, goujon 18) faisant saillie latéralement à partir du levier de soulèvement (7) est guidé dans un guidage (13) solidaire du toit commandant le mouvement de pivotement du toit (1), guidage qui présente une section terminale antérieure (14), qui coopère lors du soulèvement du couvercle (1) avec le tenon (11), goujon (18) caractérisé en ce que le levier de soulèvement (7) est fixé à celui-ci de façon à pouvoir pivoter autour d'un axe transversal (8) sur le couvercle (1), la section terminale antérieure (14) du guidage (13) s'étend obliquement vers l'avant et vers le haut et, soit le tenon (11) est fixé entre l'axe transversal (8) sur le couvercle (1) et un axe transversal (9), portant le levier de soulèvement (7), sur la glissière d'entraînement (10) sur le levier de soulèvement (7), soit un goujon (18) venant en prise dans le guidage (13) fait saillie latéralement à partir du levier de soulèvement (7) derrière le tenon (11), goujon qui s'étend parallèlement au tenon (11), tandis que le levier de soulèvement (7) est relié par un élément d'accouplement (gouttière 12') à la glissière d'entraînement (10), qui est reliée de façon à pouvoir pivoter sur sa zone antérieure autour d'un axe (19) s'étendant transversalement au levier de soulèvement (7) et qui est relié de façon à pouvoir pivoter sur sa zone arrière autour d'un axe transversal de la glissière (17), à la glissière d'entraînement (10).

2. Toit ouvrant selon la revendication 1, caractérisé en ce que les deux leviers de soulèvement (7) se faisant latéralement vis-à-vis, sont reliés par une gouttière (12) s'étendant transversalement et le tenon (11) fait saillie latéralement vers l'extérieur à partir d'une section latérale de paroi de la gouttière (12).

3. Toit ouvrant selon l'une des revendications 1 ou 2, caractérisé en ce que le tenon (11) se trouve quand le couvercle (1) est soulevé dans la section terminale (14) du guidage (13) antérieure, dirigée vers l'avant et vers le haut et quand le couvercle (1)est fermé dans la zone arrière de la section terminale antérieure (14).

4. Toit ouvrant selon la revendication 3, caractérisé en ce qu'une zone de guidage (15) prévue pour abaisser le couvercle (1) à partir de sa position de fermeture se raccorde en arrière de la section terminale antérieure (14) du guidage (13), zone (15) qui s'étend plus à plat par rapport à la section terminale antérieure (14).

5. Toit ouvrant selon la revendication 4, caractérisé en ce que le guidage (13) s'étend de façon à peu près horizontale, dans une section terminale (16) postérieure, adjacente à la zone de guidage (15) jusque dans un compartiment de réception arrière, prévu pour recevoir le couvercle (1).

6. Toit ouvrant selon l'une des revendications 1 à 5, caractérisé en ce que le guidage (13) ou le tenon (11) peut être réglé pour ajustement dans le sens longitudinal du toit.

7. Toit ouvrant selon la revendication 1, caractérisé en ce que les deux éléments d'accouplement se faisant latéralement vis-à-vis sont constitués par des zones de traverses d'une gouttière ayant en section transversale la forme d'un U, ouverte vers le haut, gouttière qui s'étend transversalement quand le couvercle est soulevé dans la zone arrière de l'ouverture du toit (2) et collecte et évacue l'eau qui rentre.

8. Toit ouvrant selon l'une des revendications 1 à 7, caractérisé en ce qu'en plus d'un dispositif de soulèvement de couvercle provoquant le soulèvement du couvercle (1) il est prévu un mécanisme de déplacement du couvercle qui soutient le soulèvement du couvercle abaissé (1) dans la position de fermeture et/ou lors du soulèvement provoque un déplacement en arrière du couvercle (1) de telle sorte que le couvercle (1) ne coince pas les éléments disposés entre le bord antérieur de l'ouverture du toit (2) et le couvercle (1).

9. Toit ouvrant selon la revendication 8, caractérisé en ce que la glissière d'entraînement (10) est une glissière, pouvant coulisse dans les guidages longitudinaux du toit, du mécanisme de déplacement du couvercle et la glissière (10), provoque un soulèvement et/ou un déplacement en arrière du couvercle (1) au moyen des leviers de soulèvement (7).
